Europäisches Patentamt

European Patent Office

Office européen des brevets

(11) Publication number: **0 484 877 A2**

# EUROPEAN PATENT APPLICATION

(21) Application number: **91118832.4**

(22) Date of filing: **05.11.91**

(51) Int. Cl.5: **G01V 9/04**

(30) Priority: **05.11.90 JP 299652/90**

(43) Date of publication of application:
**13.05.92 Bulletin 92/20**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Fujikata, Yasuhiro, c/o Int. Property**
**Div.**
**KABUSHIKI KAISHA TOSHIBA, 1-1, Shibaura**
**1-chome**
**Minato-ku, Tokyo 105(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Photo-interrupter.**

(57) A photo-interrupter includes a light emitting diode (11), first and second phototransistors (12-1, 12-2) and comparator (18). The light emitting diode (11) and the first and second phototransistors (12-1, 12-2) are arranged so as to be optically coupled with each other. Light emitted from the light emitting diode (11) is directly received by the first phototransistor (12-1) and a first photoelectric current used as a reference is generated from the first phototransistor (12-1). The second phototransistor (12-2) generates a second photoelectric current corresponding to the amount of light transmitted through a to-be-detected object when the to-be-detected object is put into an optical path ranging from the light emitting diode (11) to the second phototransistor (12-2). The first and second photoelectric currents are respectively converted into first and second voltages by means of first and second resistors (21, 20). The comparator (18) compares the first and second voltages with each other and outputs a signal indicating the presence or absence of the to-be-detected object.

F I G. 4

This invention relates to an object detecting device having a light emitting element and a light receiving element optically coupled, for detecting an object by checking whether the light emitting and receiving elements are actually optically coupled or not, and more particularly to a photo-interrupter suitable for paper detection in an OA instrument such as a copying machine, printer, or facsimile.

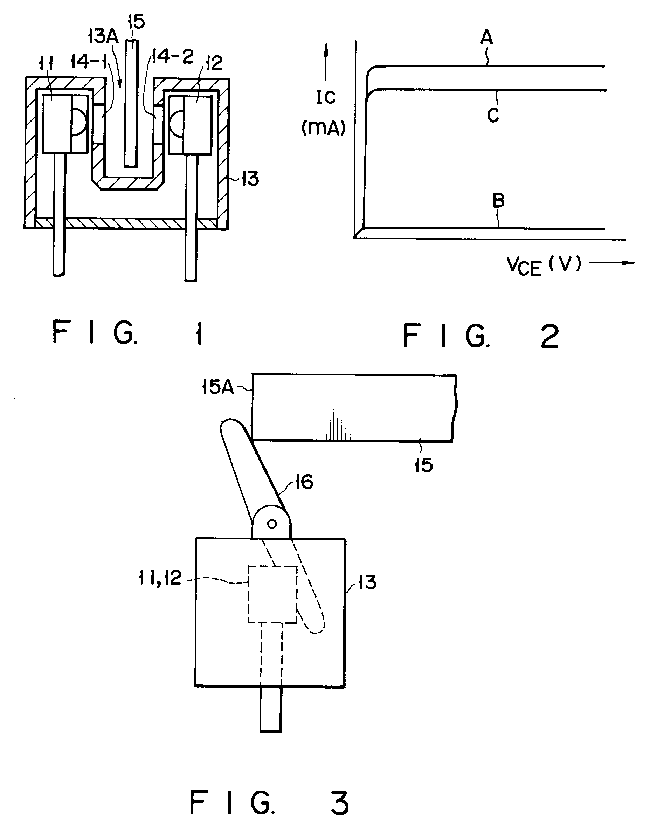

Conventionally, a photo-interrupter suitably used for paper detection is constructed as shown in Fig. 1, for example. A light emitting element 11 such as a light emitting diode (LED) and a light receiving element 12 such as a phototransistor are disposed in a casing 13 with the light emitting and receiving sections thereof set to face each other. Windows 14-1 and 14-2 are formed in portions of the casing 13 which correspond in position to the light emitting and receiving sections of the elements 11 and 12, and the light emitting element 11 and light receiving element 12 are optically coupled via the windows 14-1 and 14-2. When a sheet of paper 15 is inserted into a insertion groove (gap) 13A formed in the casing 13 for object detection, light from the light emitting element 11 to the light receiving element 12 is interrupted to reduce a photoelectric current output from the light receiving element 12 to substantially "0", thus making it possible to detect the presence of paper 15.

Fig. 2 shows the relation between a collector-emitter voltage $V_{CE}$ and a collector current $I_C$ in a case where the light receiving element 12 in Fig. 1 is a phototransistor, for example. In Fig. 2, a solid line A indicates the $V_{CE}$-$I_C$ characteristic in a case where paper 15 is not inserted into the gap 13A and a solid line B indicates the $V_{CE}$-$I_C$ characteristic in a case where paper 15 is inserted into the gap 13A.

The above photo-interrupter is effective when it is used for detecting paper 15 which may substantially completely interrupt transmission light since a difference between the photoelectric currents is large as shown by the solid lines A and B in Fig. 2. However, when tracing paper or OHP sheet having a high light transmittivity is inserted into the gap 13A, the $V_{CE}$-$I_C$ is similar to that obtained when no paper 15 is present (solid line A) as shown by the solid line C in Fig. 2, and there is a possibility that a detection error may be caused by variation in the output photoelectric current and the optical coupling state in each photo-interrupter.

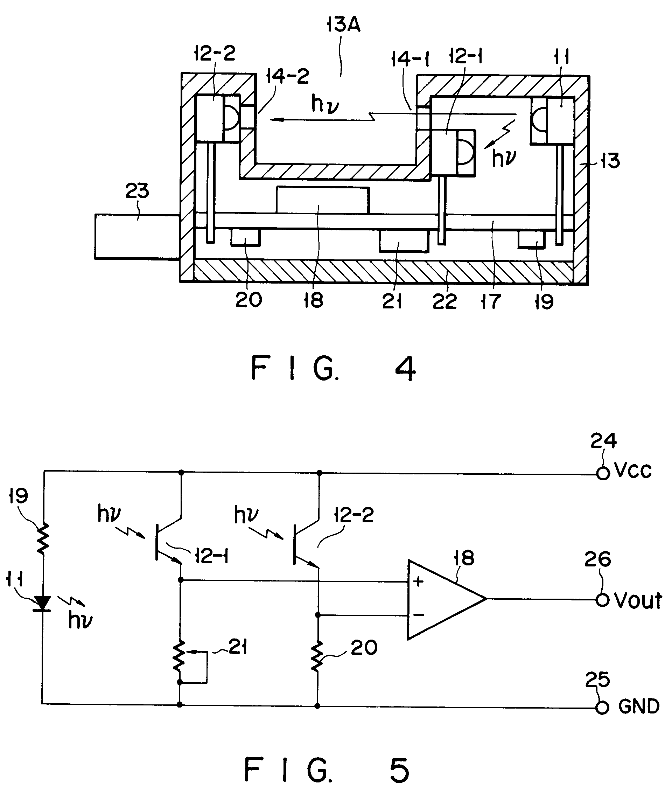

When it is required to detect paper 15 such as tracing paper or OHP sheet having a high light transmittivity, an actuator 16 shown in Fig. 3 is used in addition to the photo-interrupter. The actuator 16 is a part which can be mechanically rotated, and when the edge 15A of paper 15 is abut against one end of the actuator 16, it is rotated and the other end thereof is inserted into the gap 13A (part of the optical path ranging from the light emitting element 11 to the light receiving element 12). As a result, an output current (photoelectric current of the phototransistor) of the light receiving element varies and even the paper 15 having the high light transmittivity can be detected without fail.

However, in the system using the actuator 16, a combination of the photo-interrupter and the mechanical part is required and the number of parts is increased, thereby raising the total cost. Further, since the actuator 16 is required to be mechanically smoothly rotated and have high precision in size of the parts, the cost of the parts will become high. Since the machining precision is limited, the detection precision becomes lower than that obtained by the optical system. Since the mechanical parts are used, the operation service life is relatively short and the parts tend to be damaged when they are frequently used and thus various new problems caused by incorporation of the mechanical parts may occur.

In a case where thin paper is detected by use of the actuator system, a force applied to the paper end is weak and the actuator may not be sufficiently rotated in some cases, and therefore the positioning of the paper end is influenced and a detection error may occur.

In addition, a photo-interrupter using a microswitch is known in the art, and like the actuator system, it has a mechanical part and has defects that it tends to be worn and the quality of paper to be detected is limited. Further, in a case of an ordinary photo-interrupter, the width of a slit necessary for attaining optical coupling between the light emitting element and the light receiving element is as small as approx. 0.5 mm and the precision of positioning of the paper end is set within 0.5 mm. However, in the microswitch system, the precision of positioning of the paper end is lowered when the insertion speed of the to-be-detected paper is changed.

Accordingly, an object of this invention is to provide an object detecting device capable of stably detecting an object having a high light transmittivity or a thin object.

The above object can be attained by an object detecting device comprising a light emitting element for emitting light; a first light receiving element for directly receiving light emitted from the light emitting element and outputting a first signal as a reference; a second light receiving element optically coupled with the light emitting element, for outputting a second signal corresponding to the amount of light transmitted through a to-be-detected object when the to-be-detected object is put into an optical path; and a comparator for comparing the first signal output from the first light receiving element and the second signal output from the second light receiving element and outputting a detection signal of the to-be-detected object in response to the comparison output.

With the above construction, an output signal of the first light receiving element is used as a monitoring reference and the comparator checks whether or not the detected value by the second light receiving element is varied with respect to the reference value. As a result, even when the light transmittivity of the to-be-detected object is high and variation in the detected value by the second light receiving element is small, the presence of the object can be detected without fail.

Further, the above object can be attained by an object detecting device comprising a light emitting element for emitting light; a first light receiving element for directly receiving light emitted from the light emitting element and outputting a signal as a reference; a light emission controlling circuit for controlling the intensity of light from the light emitting element to set the same to a constant level in response to the signal output from the first light receiving element; a second light receiving element optically coupled with the light emitting element, for outputting a second signal corresponding to the amount of light transmitted through a to-be-detected object when the to-be-detected object is put into an optical path; and an output circuit for outputting a detection signal of the to-be-detected object in response to the signal output from the second light receiving element.

With the above construction, the intensity of light from the light emitting element is kept constant by means of the first light receiving element and light emission controlling circuit and a detection signal of the to-be-detected object is derived from the output circuit based on the detected value by the second light receiving element. Thus, since the intensity of light from the light emitting element is always kept constant, the object can be stably detected even when the light transmittivity of the to-be-detected object is high and variation in the detected value by the second light receiving element.

This invention can be more fully understood from the following detailed description when taken in conjunction with the accompanying drawings, in which:

Fig. 1 is a side view showing a conventional photo-interrupter with a casing thereof partly cut away, for illustrating the structure of the conventional photo-interrupter;

Fig. 2 shows a diagram showing the relation between the collector-emitter voltage and the collector current in a case where the light receiving element of Fig. 1 is a phototransistor;

Fig. 3 is a front view showing an example of the structure of the conventional photo-interrupter in a case where paper having a high light transmittivity is detected by use of a photo-interrupter;

Fig. 4 is a side view showing a photo-interrupter according to a first embodiment of this invention with a casing thereof partly cut away, for illustrating the structure of the photo-interrupter;

Fig. 5 is a circuit diagram showing the circuit construction of the photo-interrupter of Fig. 4;

Fig. 6 is a side view showing another example of the arrangement of the light receiving element with a casing thereof partly cut away, for illustrating the arrangement of the light receiving element;

Fig. 7 is a side view showing still another example of the arrangement of the light receiving element with a casing thereof partly cut away, for illustrating the arrangement of the light receiving element;

Fig. 8 is a perspective view for illustrating the structure of an element having one of the light emitting and receiving elements integrated therein and used in the photo-interrupter shown in Fig. 7 by observing the element through the package of the element;

Fig. 9 is a side view showing a photo-interrupter according to a second embodiment of this invention with a casing thereof partly cut away, for illustrating the structure of a photo-interrupter according to a second embodiment of this invention;

Fig. 10 is a circuit diagram showing an example of the circuit construction of the photo-interrupter shown in Fig. 9;

Fig. 11 is a circuit diagram showing another example of the circuit construction of the photo-interrupter shown in Fig. 9;

Fig. 12 is perspective view for illustrating an example of the arrangement in a case where the photo-interrupter of this invention is used in a printer, electronic typewriter or the like;

Fig. 13 is a front view for illustrating an example of the arrangement in a case where the photo-interrupter of this invention is used in an ordinary paper copying machine by directly observing the main body; and

Fig. 14 is a flowchart for illustrating the paper detecting operation effected immediately before the copying operation and a paper feeding system in the ordinary paper copying machine shown in Fig. 13.

Fig. 4 shows a photo-interrupter as an example of a to-be-detected object according to a first embodiment of this invention. A light emitting element 11, first and second light receiving elements 12-1 and 12-2, printed circuit board 17, operational amplifier 18, resistors 19 and 20, variable resistor 21 and the like are disposed in a casing 13 which is sealed by a rear lid 22. A connector 23 is disposed on the casing 13 and an output signal Vout is derived from the connector 23 by applying a power source potential Vcc and a ground potential GND to the above elements. The light emitting element 11 is formed of a light emitting diode (LED), for example, and effects the electric-light conversion to emit light. The first and second light receiving elements 12-1 and 12-2 are each formed of a phototransistor, for example, and effect the photoelectric conversion to generate a current (photoelectric current) corresponding to the amount of received light. The light emitting section of the light emitting element 11 and the light receiving section of the light receiving element 12-1 are arranged to face each other so that the light receiving element 12-1 can directly receive light from the light emitting element 11. On the other hand, the light emitting section of the light emitting element 11 and the light receiving section of the light receiving element 12-2 are arranged to face each other so that the light receiving element 12-2 can be optically coupled with the light emitting element 11 via windows 14-1 and 14-2 formed in the casing 13. The amount of light transmitted through paper (not shown) inserted into the insertion groove (gap) 13A for object detection formed in the casing 13 is detected. The above elements 11, 12-1, 12-2, operational amplifier 18, resistors 19 and 20, variable resistor 21 and the like are mounted on the printed circuit board 17.

Fig. 5 shows the circuit construction of the photo-interrupter shown in Fig. 4. The resistor and the anode-cathode path of the light emitting diode 11 are serially connected between the power source terminal 24 to which the power source potential Vcc is applied and the ground terminal 25 to which the ground potential GND is applied. The collector of the first phototransistor 12-1 which is optically coupled with the light emitting diode 11 is connected to the terminal 24 and the variable resistor 21 is connected between the emitter of the transistor 12-1 and the terminal 25. Further, the collector of the second phototransistor 12-2 which is optically coupled with the light emitting diode 11 is connected to the terminal 24 and the resistor 20 is connected between the emitter of the transistor 12-2 and the terminal 25. A connection node between the emitter of the phototransistor 12-1 and the variable resistor 21 is connected to the non-inverting input terminal (+) of the operational amplifier 18 and a connection node between the emitter of the phototransistor 12-2 and the variable resistor 20 is connected to the inverting input terminal (-) of the operational amplifier 18. A detection signal Vout showing the presence of the object is output from the output terminal 26 connected to the output terminal of the operational amplifier 18.

It is also possible to connect the inverting input terminal (-) of the operational amplifier 18 to the connection node between the emitter of the phototransistor 12-1 and the variable resistor 21 and connect the non-inverting input terminal (+) of the operational amplifier 18 to the connection node between the emitter of the phototransistor 12-1 and the resistor 20.

Next, the operation of the circuit having the above construction is explained. Light emitted from the light emitting diode 11 is steadily monitored by the phototransistor 12-1. Assuming that a photoelectric current (emitter current) generated from the phototransistor 12-1 is $I_1$ and the resistance of the variable resistor 21 is $R_V$, "$I_1 \cdot R_V$" is applied to the non-inverting input terminal (+) of the operational amplifier 18 as a reference voltage. The phototransistor 12-2 is used to detect the light transmittivity of a to-be-detected object, for example, paper. Assuming that a photoelectric current (emitter current) generated from the phototransistor 12-2 is $I_2$ and the resistance of the resistor 20 is $R_2$, "$I_2 \cdot R_2$" is applied to the inverting input terminal (-) of the operational amplifier 18. The operational amplifier 18 outputs an output signal of "H" level when "$I_1 \cdot R_V < I_2 \cdot R_2$" and outputs an output signal of "L" level when "$I_1 \cdot R_V > I_2 \cdot R_2$".

In a case where the connection node between the emitter of the phototransistor 12-1 and the variable resistor 21 is connected to the inverting input terminal (-) of the operational amplifier 18 and the connection node between the emitter of the phototransistor 12-2 and the resistor 20 is connected to the non-inverting input terminal (+) of the operational amplifier 18, an output signal of "L" level is output when "$I_1 \cdot R_V < I_2 \cdot R_2$" and an output signal of "L" level is output when "$I_1 \cdot R_V > I_2 \cdot R_2$".

Adjustment in the initial condition is effected by the variable resistor 21. That is, the resistance $R_V$ of the variable resistor 21 is adjusted (increased) so as to set the output Vout of the operational amplifier 18 to the "H" level in a state wherein no paper is inserted into the gap 13A and the resistance $R_V$ of the variable resistor 21 is adjusted (reduced) so as to set the output Vout of the operational amplifier 18 to the "L" level in a state wherein paper is inserted in the gap 13A or in an optical path between the light emitting diode 11 and the phototransistor 12-2. The operating condition set at this time is as follows:

(a) In a case where no paper is present:

$I_1 \cdot R_V > I_2 \cdot R_2$

Vout = "H" level.

(b) in a case where paper is present:

$(I_1 - \Delta I)R_V < I_2 \cdot R_2$

Vout = "L" level.

Thus, as the light transmittivity of paper to be detected becomes nearer to "1", the adjusting range of the resistance $R_V$ of the variable resistor 21 becomes narrower.

With the above construction, a voltage output from the connection node between the phototransistor 12-1 and the variable resistor 21 is used as a reference for monitoring and whether or not a voltage of the connection node between the phototransistor 12-2 and the resistor 20 has varied with respect to the reference voltage can be checked by means of the comparator 18. As a result, a to-be-detected object can be correctly detected even when the light transmittivity of the to-be-detected object is high and variation in the detected value by the phototransistor 12-2 is small. When it is compared with the actuator system, high reliability and long service life can be obtained since all parts are formed of electrical and optical parts. In the actuator system, the mechanical parts are worn as they are frequently used, but with the construction shown in Figs. 4 and 5, the reliability and service life can be ensured by time defined by the estimated service life and the maintenance may become easy. Further, since the position detecting precision can be determined by the width (which is normally 0.5 mm ± 0.1 mm) of a slit formed in the casing, the precision of ± 0.1 mm can be expected. Paper can be detected when the paper end interrupts the optical path even if an extremely thin film is used, a detection error can be prevented. The number of parts is increased since the resistor, variable resistor, phototransistors, operational amplifier and the like are additionally used, but the cost of the parts is lower than that of the actuator. Since the paper quality is not limited, for example, extremely thin film-like paper which cannot cause the actuator to be mechanically rotated can be detected and the number of types of paper which can be used in practice is increased, it can be significantly improved in practice.

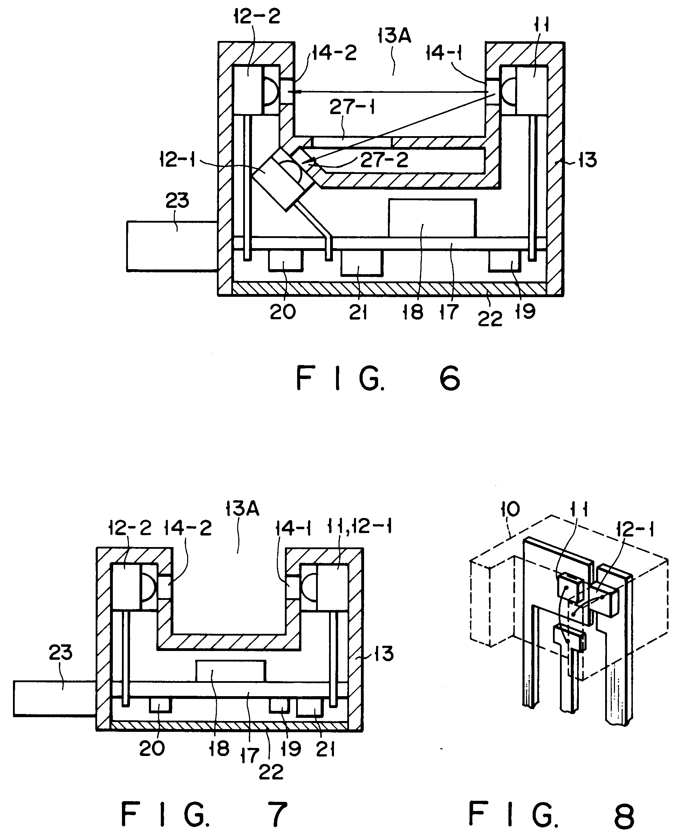

Fig. 6 shows another example of the arrangement of the second light receiving element 12-2, and light receiving windows 27-1 and 27-2 are provided on the bottom portion of a slit 13A formed in the casing 13 and the light receiving section and the light emitting section of the light emitting element 11 are set to face with each other with the light receiving windows 27-1 and 27-2 disposed therebetween so as to be optically coupled with each other. In other words, the light receiving element 12-2 is disposed in position in which the optical path is not interrupted by insertion of paper.

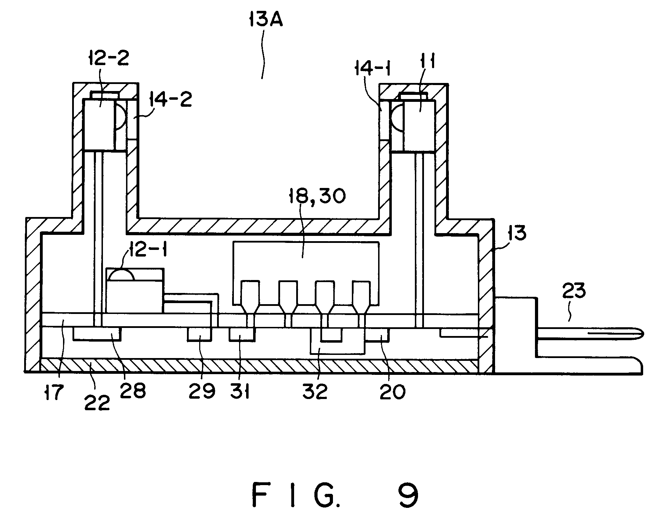

Figs. 7 and 8 respectively show still other examples of the second light receiving element 12-2, Fig. 7 is a side view with the casing 13 partly cut away, and Fig. 8 is a perspective view showing the light emitting element 11 and light receiving element 12-1 by observing them through the casing. As shown in Fig. 8, the light receiving element 12-1 is sealed in the same package of the light emitting element 11.

In Figs. 6 to 8, portions which are the same as those of Fig. 4 are denoted by the same reference numerals and the explanation thereof is omitted.

With the above construction, the operation and effect which are substantially the same as those obtained by the structure shown in Fig. 4 can be attained. Particularly, the structure as shown in Figs. 7 and 8 is preferable for miniaturization and easy mounting.

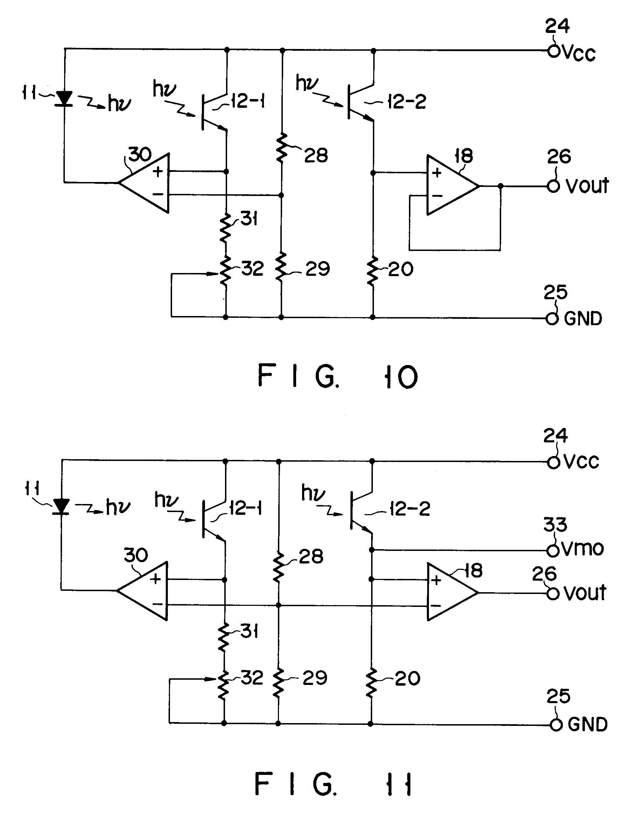

Fig. 9 shows a photo-interrupter which is an object detecting device according to a second embodiment of this invention and having substantially the same construction as that of Fig. 4, but as shown in Figs. 10 and 11, the circuit construction thereof is slightly different from that of Fig. 4. The circuits are different from the circuit of the first embodiment in that the intensity of light emitted from the light emitting element 11 is kept constant. Portions of Fig. 9 which are the same as those of Fig. 4 are denoted by the same reference numerals and the explanation thereof is omitted.

The circuit shown in Fig. 10 is a circuit for outputting an analog signal and has resistors 28 and 29 series-connected between a power source terminal 24 to which a power source potential Vcc is applied and a ground terminal 25 to which a ground potential GND is applied. The resistors 28 and 29 function as a reference voltage generator and a connection node between the resistors 28 and 29 is connected to the inverting input terminal (-) of an operational amplifier 30. Further, the collector-emitter path of the phototransistor 12-1, resistor 31, and variable resistor 32 are series-connected between the terminals 24 and 25 and the emitter of the transistor 12-1 is connected to the non-inverting input terminal (+) of the operational amplifier 30. An output terminal of the operational amplifier 30 is connected to the cathode of the light emitting diode 11 and the terminal 24 is connected to the anode of the light emitting diode 11. The operational amplifier 30 functions to keep the output (light intensity) of the light emitting diode 11 at a constant level.

Further, the terminal 24 is connected to the collector of the phototransistor 12-2 and a resistor 20 is connected between the emitter of the transistor 12-2 and the terminal 25. The non-inverting input terminal of the operational amplifier 18 is connected to the emitter of the phototransistor 12-2 and the inverting input terminal (-) and the output terminal of the operational amplifier 18 are connected to each other. An output signal Vout is derived from the output terminal 26 connected to the output terminal of the operational amplifier 18.

Fig. 11 shows another construction of a circuit corresponding to the object detecting device shown in Fig. 9 and constructed to generate a digital signal. That is, the inverting input terminal (-) of the operational amplifier 18 in the circuit shown in Fig. 10 is connected to a connection node between the resistors 28 and 29. Further, a terminal 33 connected to the emitter of the phototransistor 12-2 is used for voltage monitoring and used for voltage measurement when the resistance of the variable resistor 32 is set.

In the construction of Figs. 10 and 11, light emitted from the light emitting diode 11 is monitored by the phototransistor 12-1 and fed back to the cathode of the light emitting diode 11 by means of the operational amplifier 30. The operation principle is as follows. First, the resistance $R_V$ of the variable resistor 32 is adjusted to set the intensity of the light output of the light emitting diode 11 while observing the level of the output signal Vout of the output terminal 26 in the case of the circuit of Fig. 10 and while observing the level of the voltage Vmo of a voltage monitoring terminal 33 in the case of the circuit of Fig. 11. When the light output of the light emitting diode 11 is reduced by variation in the environmental condition (variation in the ambient light) or reduction in the power source voltage Vcc, the base current of the phototransistor 12-1 is equivalently reduced and consequently the collector current $I_C$ is accordingly reduced ($\Delta I_C$). As a result, the potential of the non-inverting input terminal (+) of the operational amplifier 30 is lowered by "$I_C \cdot R_V$". At this time, since the potential of the inverting input terminal (-) is set at "$V_{cc} \cdot R_2/(R_1 + R_2)$" and kept constant, an output voltage of the operational amplifier 30 is lowered by "$AG \cdot R \cdot \Delta I_C$" (AG is an amplification factor of the operational amplifier) and $V_F$ and $I_F$ of the light emitting diode 11 increase. As a result, the light output of the light emitting diode 11 increases. On the other hand, when the light output of the light emitting diode 11 increases, the base current of the phototransistor 12-1 is equivalently increased and consequently the collector current $I_C$ is accordingly increased and $V_F$ and $I_F$ of the light emitting diode 11 are lowered. Then, the light output of the light emitting diode 11 is lowered. The operation of the feedback circuit on the side of the light emitting diode 11 is the same as that effected in the circuit of Fig. 10 for outputting an analog output and in the circuit of Fig. 11 for outputting a digital output.

Since the collector current $I_C$ of the phototransistor 12-2 has a linear-like relation with respect to the amount of light passing through the to-be-detected object, the potential of the non-inverting input terminal (+) of the operational amplifier 18 is given by "$I_C \cdot R_3$". The circuit for outputting an analog output shown in Fig. 10 outputs a voltage Vout having a specified relation with respect to the amount of light passing through the to-be-detected object according to the potential of the non-inverting input terminal (+) since the inverting input terminal (-) of the operational amplifier 18 and the output terminal are short-circuited. On the other hand, in the circuit for outputting a digital output shown in Fig. 11, the operational amplifier 18 functions as a comparator having a positive input ($I_C \cdot R_3$) and a negative input "$V_{cc} \cdot R_2/(R_1 + R_2)$" since a reference voltage is applied to the inverting input terminal (-) of the operational amplifier 18, and as a result, a digital signal is output.

If "$Vcc \cdot R2/(R1 + R2) = Vcc$" is set up when a reference voltage is applied, it is suitably used for detection of an object having a high light transmittivity (transparency) and it is possible to detect an object having a light transmittivity of 90 % or more like an OHP sheet.

The effect obtained in the second embodiment which is the same as that obtained in the first embodiment can be attained.

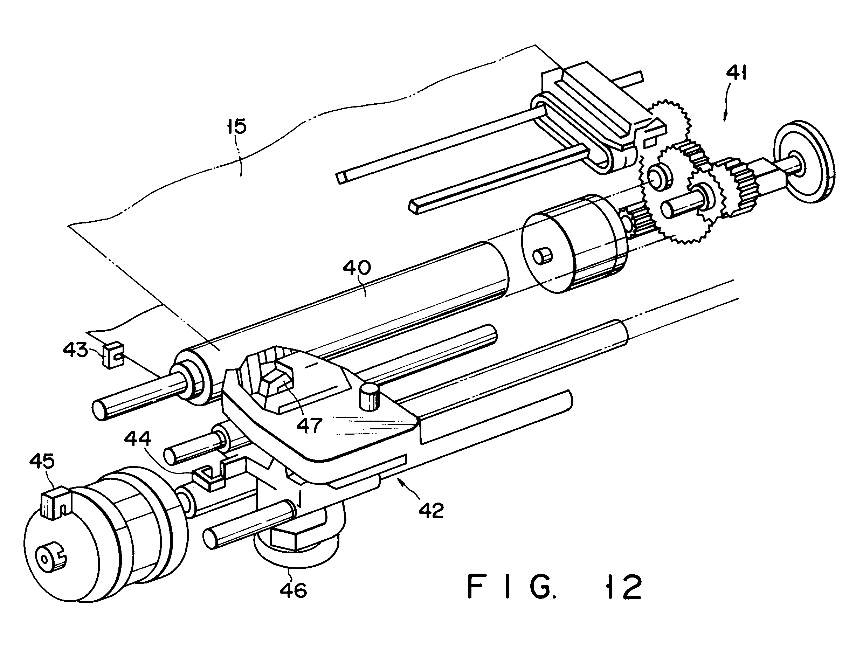

Fig. 12 shows the construction of a printing section such as a printer or electronic typewriter using the photo-interrupter according to each of the embodiments. The printing section includes a platen roller 40 for feeding the paper 15, driving system 41 for rotating the platen roller 41 and carriage 42.

In the above printer (electronic typewriter), various types of photo-interrupters having various applications, for example, a photo-interrupter 43 for paper detection, photo-interrupter 44 for detection of the initial position of the head, photo-interrupter 45 for paper feed detection, photo-interrupter 46 for detection of the position of the printing head, photo-interrupter 47 for detection of the ink ribbon end are provided. The photo-interrupter of each of the above embodiments is particularly suitable for the photo-interrupter 43 for paper detection.

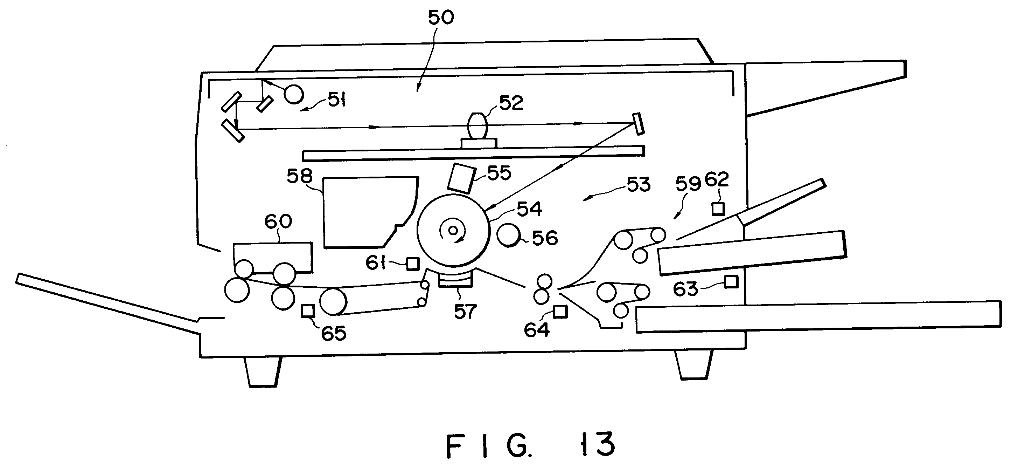

Fig. 13 shows a schematic construction of a PPC (ordinary paper copying machine) using a photo-interrupter of each of the above embodiments. An optical system 50 of the PPC is constructed by an original document exposing/scanning section 51 and a magnification modifying lens 52. An image forming section 53 is constructed by a photosensitive drum 54, charging section 55 for charging the photosensitive drum 54, developing section 56, transferring section 57 and cleaning section 58. A paper feeding system 59 properly selects one of sheets of copy paper of different sizes and feeds the selected paper. A fixing section 60 fixes an image transferred by the transferring section 57 and then discharges the same.

In the above PPC, various types of photo-interrupters for detection of the drum position, detection of the optical table position, detection of the lens position, detection of the paper separation, detection of the presence of paper, detection of the upper cassette size, detection of the lower cassette size, detection of the paper discharging and detection of the paper feed are used. The photo-interrupter of this invention may be suitably used for a photo-interrupter 61 for detection of the paper separation, photo-interrupters 62 and 63 for detection of the presence of paper, photo-interrupter 64 for detection of the paper discharging, and photo-interrupter 65 for detection of the paper feed.

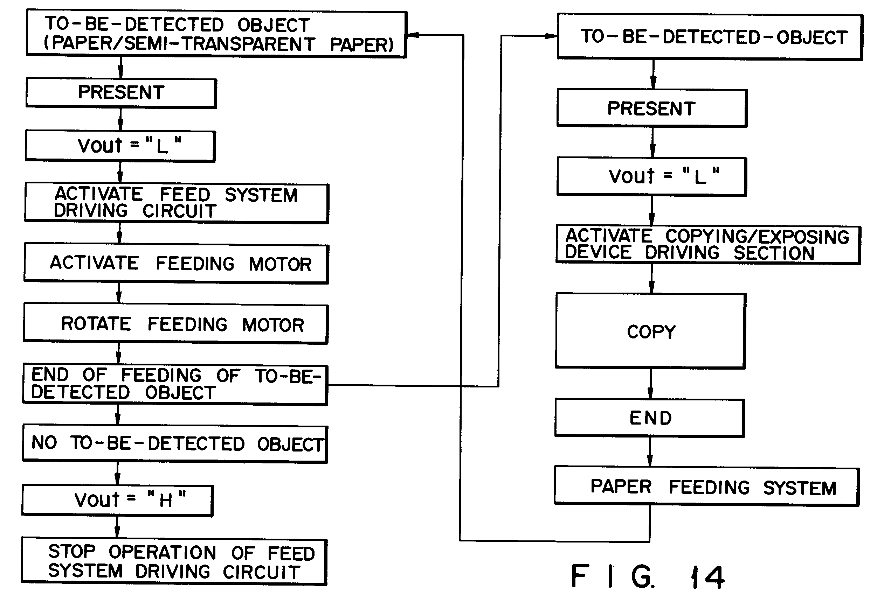

Fig. 14 schematically shows a flowchart for detecting to-be-copied paper of the PPC shown in Fig. 13. The left-side flow shows the paper feeding process and the right-side flow shows the paper detection process immediately before the copying operation. When paper which is a to-be-detected object is present, an output Vout of the operational amplifier 18 is set to the "L" level. As a result, the operation of the feeding system driving circuit is started to rotate the feeding motor. Rotation of the feeding motor causes the feeding roller, and when the operation of feeding the paper which is a to-be-detected object is completed and the to-be-detected object goes out of the range, the output Vout of the operational amplifier 18 is set to the "H" level and the operation of the feeding system driving circuit is completed.

On the other hand, after completion of the paper (to-be-detected object) feeding, paper detection is effected by another object detecting device immediately before the copying operation. When paper which is a to-be-detected object is present, the output signal Vout of the operational amplifier 18 is set to the "L" level and the operation of the driving section of the copying/exposing device is started. As a result, the copying operation is effected, and when the copying operation is completed, this fact is transmitted to the paper feeding system and next paper detection is effected.

In the above embodiments, paper is treated as a to-be-detected object as an example, but something different from paper can be used. Further, the photo-interrupter is used as the object detection device as an example in the above explanation, but this invention is not limited to the photo-interrupter. That is, this invention can be applied to another object detection device in which the light emitting and receiving elements are optically coupled to each other and the completion or interruption of the optical path between the light emitting and receiving elements is detected so as to detect the presence of an object.

**Claims**

1. An object detecting device for detecting an object by detecting completion or interruption of an optical path, characterized by comprising:

   light emitting means (11); first light receiving means (12-1, 21) for directly receiving light emitted from said light emitting means (11) and outputting a first signal as a reference; second light receiving means (12-2, 20) optically coupled with said light emitting means (11), for outputting a second signal corresponding to the amount of light transmitted through a to-be-detected object when the to-be-detected object is put into an optical path; and comparing means (18) for comparing the first signal output from said first light receiving means (12-1, 21) and the second signal output from said second light receiving means (12-2, 20) and outputting a detection signal of the to-be-detected object in response to the comparison output.

2. An object detecting device according to claim 1, characterized in that said light emitting means includes a light emitting diode (11).

3. An object detecting device according to claim 1 or 2, characterized in that said first light receiving means includes a first phototransistor (12-1) and a first resistor (21) for current-voltage conversion which is series-connected in the current path of said first phototransistor (12-1) and said second light receiving means includes a second phototransistor (12-2) and a second resistor (20) for current-voltage conversion which is series-connected in the current path of said second phototransistor (12-2), at least one of said first and second resistors (21, 20) being a variable resistor.

4. An object detecting device according to claim 1, 2 or 3, characterized in that said light emitting means (11) and said first light receiving means (10) are sealed into a single package.

5. An object detecting device according to claim 1, characterized in that said comparing means includes an operational amplifier (18).

6. An object detecting device for detecting an object by detecting completion or interruption of an optical path, characterized by comprising:

light emitting means (11); first light receiving means (12-1, 32) for directly receiving light emitted from said light emitting means (11) and outputting a signal as a reference; light emission controlling means (30) for controlling the intensity of light from said light emitting means (12-1, 32) to set the same to a constant level in response to the signal output from said first light receiving means (12-1, 32); second light receiving means (12-2, 20) optically coupled with said light emitting means (11), for outputting a second signal corresponding to the amount of light transmitted through a to-be-detected object when the to-be-detected object is put into an optical path; and output means (18) for outputting a detection signal of the to-be-detected object in response to the signal output from said second light receiving means (12-2, 20).

7. An object detecting device according to claim 6, characterized in that said light emitting means includes a light emitting diode (11).

8. An object detecting device according to claim 6, characterized in that said first light receiving means includes a first phototransistor (12-1) and a variable resistor (32) for current-voltage conversion which is series-connected in the current path of said first phototransistor (12-1).

9. An object detecting device according to claim 6 or 7, characterized in that said second light receiving means includes a second phototransistor (12-2) and a second resistor (20) for current-voltage conversion which is series-connected in the current path of said second phototransistor (12-2).

10. An object detecting device according to claim 6, characterized in that said light emission controlling means includes reference voltage generating means (28, 29) for generating a reference voltage; and an operational amplifier (30) having a first input terminal supplied with an output of said reference voltage generating means (28, 29) and a second input terminal supplied with an output signal of said first light receiving means (12-1 32) and supplying an output to control the intensity of light of said light generating means (11) to set the same to a constant value.

11. An object detecting device according to claim 6, characterized in that said output means includes an operational amplifier (18) having a first input terminal supplied with an output signal of said second light receiving means (12-2, 20) and a second input terminal and output terminal connected together, and outputting an analog signal from the output terminal.

12. An object detecting device according to claim 6, characterized in that said output means includes an operational amplifier (18) having a first input terminal supplied with an output signal of said second light receiving means (12-2, 20) and a second input terminal supplied with an output of said reference voltage generating means (28, 29) and outputting a digital signal.

13. An object detecting device according to claim 10, characterized in that said reference voltage generating means includes a plurality of resistors (28, 29) series-connected between a power source (Vcc) and a ground terminal (GND), for generating a reference voltage by dividing the power source voltage by use of said resistors (28, 29).

14. An object detecting device according to claim 13, characterized in that at least one of said plurality of resistors (28, 29) series-connected between said power source (Vcc) and ground terminal (GND) is formed of a variable resistor and the reference voltage can be changed by changing the resistance of said variable resistor.

F I G. 1

F I G. 2

F I G. 3

EP 0 484 877 A2

F I G. 4

F I G. 5

10

F I G.　6

F I G.　7

F I G.　8

F I G.    9

F I G. 10

F I G. 11

FIG. 12

F I G. 13

EP 0 484 877 A2

```
┌─────────────────────────────┐          ┌─────────────────────────────┐
│   TO-BE-DETECTED OBJECT      │◄──┐  ┌──►│   TO-BE-DETECTED-OBJECT      │
│ (PAPER/SEMI-TRANSPARENT PAPER)│   │  │   └─────────────────────────────┘
└─────────────────────────────┘   │  │                 │
              │                    │  │                 ▼
              ▼                    │  │   ┌─────────────────────────────┐
      ┌───────────────┐           │  │   │         PRESENT             │
      │    PRESENT    │           │  │   └─────────────────────────────┘
      └───────────────┘           │  │                 │
              │                    │  │                 ▼
              ▼                    │  │   ┌─────────────────────────────┐
      ┌───────────────┐           │  │   │       Vout = " L "          │
      │  Vout = " L " │           │  │   └─────────────────────────────┘
      └───────────────┘           │  │                 │
              │                    │  │                 ▼
              ▼                    │  │   ┌─────────────────────────────┐
┌─────────────────────────┐       │  │   │ ACTIVATE COPYING/EXPOSING   │
│ ACTIVATE  FEED  SYSTEM   │       │  │   │ DEVICE  DRIVING  SECTION    │
│ DRIVING  CIRCUIT         │       │  │   └─────────────────────────────┘
└─────────────────────────┘       │  │                 │
              │                    │  │                 ▼
              ▼                    │  │   ┌─────────────────────────────┐
┌─────────────────────────┐       │  │   │                             │
│  ACTIVATE  FEEDING MOTOR │       │  │   │          COPY               │
└─────────────────────────┘       │  │   │                             │
              │                    │  │   └─────────────────────────────┘
              ▼                    │  │                 │
┌─────────────────────────┐       │  │                 ▼
│  ROTATE  FEEDING MOTOR   │       │  │   ┌─────────────────────────────┐
└─────────────────────────┘       │  │   │          END                │
              │                    │  │   └─────────────────────────────┘
              ▼                    │  │                 │
┌─────────────────────────┐───────┘  │                 ▼
│ END OF FEEDING OF TO-BE- │──────────┘   ┌─────────────────────────────┐
│ DETECTED  OBJECT         │              │   PAPER  FEEDING  SYSTEM    │
└─────────────────────────┘              └─────────────────────────────┘
              │
              ▼
┌─────────────────────────┐
│ NO TO-BE-DETECTED OBJECT │
└─────────────────────────┘
              │
              ▼
      ┌───────────────┐
      │  Vout = " H " │
      └───────────────┘
              │
              ▼
┌─────────────────────────┐
│ STOP OPERATION OF FEED   │
│ SYSTEM DRIVING CIRCUIT   │
└─────────────────────────┘
```

F I G. 14